# EUROPEAN PATENT SPECIFICATION

(11) **EP 3 503 059 B1**
(45) Date of publication and mention of the grant of the patent: **12.07.2023**
(21) Application number: 17382882.3
(22) Date of filing: 21.12.2017
(51) Int. Cl.: G08B 25/08, G08B 29/04, G08B 29/14, H04M 11/04

(54) **INTEGRATED VOICE OVER IP COMMUNICATION IN FIRE SYSTEMS**
INTEGRIERTE VOIP-KOMMUNIKATION IN FEUERSYSTEMEN
COMMUNICATION DE VOIX SUR IP INTÉGRÉ DANS DES SYSTÈMES D'INCENDIE

(43) Date of publication of application: 26.06.2019
(73) Proprietor: Autronica Fire & Security AS, 7047 Trondheim (NO)
(72) Inventor: RUBIO CORREDERA, Carlos, 7041 Trondheim (NO)
(74) Representative: Balder IP Law, S.L.

(56) References cited:
- US-A1- 2009 323 904
- US-A1- 2012 257 615
- US-A1- 2014 092 796

## Description

### BACKGROUND

Exemplary embodiments pertain to the art of fire alarm and control systems and more specifically to integrated voice over IP communication in fire systems.

A typical alarm system for a building, such as an office building or an apartment building, has multiple types of detectors and alarms. These include smoke, heat and carbon monoxide detectors as well as fire and smoke alarms. In addition, the typical alarm system has a control center including multiple panels that can be operated to show a status of the alarm system as well as multiple individuals who are required to install and support the alarm system.

Typically, for live, technical support from an authorized or certified service provider, a technician will use a communication apparatus or a personal computer. In some cases, the support service provider telecommunication apparatus is not available or out of date (stickers in the front). Also, in some cases communication apparatus service coverage is an issue and access to a communication apparatus or a personal computer is not possible. US2014/092796A1 and US2009/323904A1 are examples of the relevant background art.

### BRIEF DESCRIPTION

Disclosed is a fire control and detection system with integrated voice over IP communication as set out in claims 1 to 3 and an associated method as claimed in claim 4.

### BRIEF DESCRIPTION OF THE DRAWINGS

The following descriptions should not be considered limiting in any way. With reference to the accompanying drawings, like elements are numbered alike:
FIG. 1 depicts a block diagram of a computer system for use in implementing one or more embodiments;
FIG. 2 depicts a diagram of a system for integrated VOIP communication in a fire system according to embodiments; and
FIG. 3 depicts a diagram of a building with a system for VOIP communication in a fire system according to embodiments.

The diagrams depicted herein are illustrative. There can be many variations to the diagram or the operations described therein without departing from the scope as defined by the claims. For instance, the actions can be performed in a differing order or actions can be added, deleted or modified. Also, the term "coupled" and variations thereof describes having a communications path between two elements and does not imply a direct connection between the elements with no intervening elements/connections between them. All of these variations are considered a part of the specification.

### DETAILED DESCRIPTION

A detailed description of one or more embodiments of the disclosed apparatus and method are presented herein by way of exemplification and not limitation with reference to the Figures.

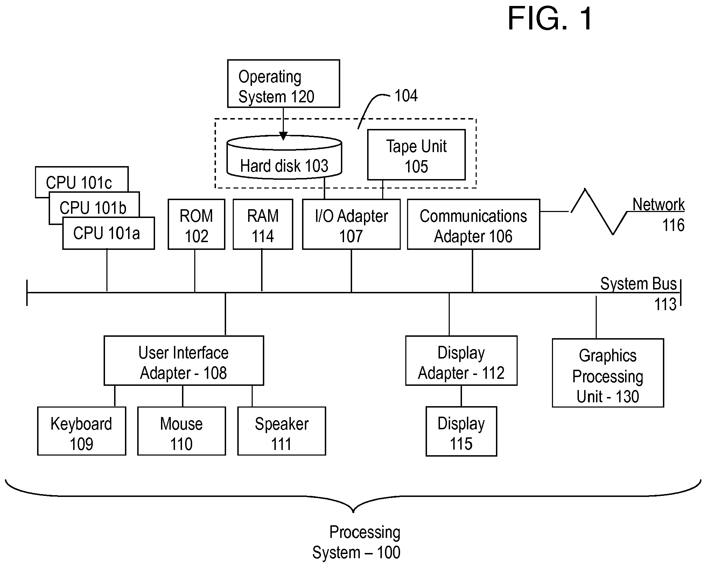

Referring to FIG. 1, there is shown an embodiment of a processing system 100 for implementing the teachings herein. In this embodiment, the system 100 has one or more central processing units (processors) 101a, 101b, 101c, etc. (collectively or generically referred to as processor(s) 101). In one embodiment, each processor 101 may include a reduced instruction set computer (RISC) microprocessor. Processors 101 are coupled to system memory 114 and various other components via a system bus 113. Read only memory (ROM) 102 is coupled to the system bus 113 and may include a basic input/output system (BIOS), which controls certain basic functions of system 100.

FIG. 1 further depicts an input/output (I/O) adapter 107 and a network adapter 106 coupled to the system bus 113. I/O adapter 107 may be a small computer system interface (SCSI) adapter that communicates with a hard disk 103 and/or tape storage drive 105 or any other similar component. I/O adapter 107, hard disk 103, and tape storage device 105 are collectively referred to herein as mass storage 104. Operating system 120 for execution on the processing system 100 may be stored in mass storage 104. A network adapter 106 interconnects bus 113 with an outside network 116 enabling data processing system 100 to communicate with other such systems. A screen (e.g., a display monitor) 115 is connected to system bus 113 by display adaptor 112, which may include a graphics adapter to improve the performance of graphics intensive applications and a video controller. In one embodiment, adapters 107, 106, and 112 may be connected to one or more I/O busses that are connected to system bus 113 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 113 via user interface adapter 108 and display adapter 112. A keyboard 109, mouse 110, and speaker 111 all interconnected to bus 113 via user interface adapter 108, which may include, for example, a Super I/O chip integrating multiple device adapters into a single integrated circuit.

In exemplary embodiments, the processing system 100 includes a graphics processing unit 130. Graphics processing unit 130 is a specialized electronic circuit designed to manipulate and alter memory to accelerate the creation of images in a frame buffer intended for output to a display. In general, graphics processing unit 130 is very efficient at manipulating computer graphics and image processing, and has a highly parallel structure that makes it more effective than general-purpose CPUs for algorithms where processing of large blocks of data is done in parallel.

Thus, as configured in FIG. 1, the system 100 includes processing capability in the form of processors 101, storage capability including system memory 114 and mass storage 104, input means such as keyboard 109 and mouse 110, and output capability including speaker 111 and display 115. In one embodiment, a portion of system memory 114 and mass storage 104 collectively store an operating system coordinate the functions of the various components shown in FIG. 1.

Turning now to an overview of technologies that are more specifically relevant to aspects of the disclosure, fire systems include various system devices that can be deployed within a facility, such as an office building, and/or a vessel, such as a ship. Each system device performs specific tasks such as detection of smoke, fire, and carbon monoxide. A system device for a fire system can also include a control panel that communicates with the other devices and monitors the status of the fire system. Often, these system devices are distributed throughout a facility or vessel to maximize the detection of adverse conditions and alerting occupants of the facility or vessel as to any adverse conditions. These system devices require periodic maintenance to ensure proper operation. During maintenance, a support technician telecommunication apparatus is not always available or service might not be available in the specific location. Usage of cellular communication apparatuses can be problematic as system devices may be located in bad coverage areas or are blocked based on the location of the system device within the building or vessel (e.g., building basement).

Turning now to an overview of the aspects of the disclosure, one or more embodiments address the above-described shortcomings of the prior art by providing a system to integrate a voice over internet protocol (VOIP) service call capability into a fire system (e.g., fire alarm control panel, repeater panels, and control & monitoring stations).

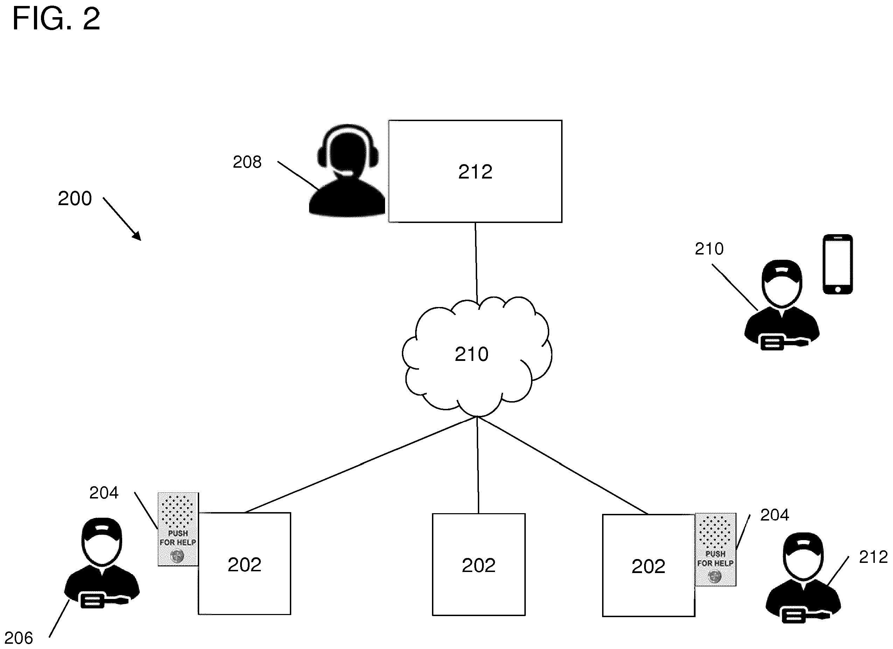

Turning now to a more detailed description of aspects of the present, FIG. 2 depicts a diagram of a system for integrated VOIP communication in a fire system according to embodiments. The system 200 includes alarm system devices 202, a network 210, and an alarm monitoring system 212. The alarm system devices 202 are in electronic communication with the alarm monitoring system 212. The alarm monitoring system 212 can be any type of alarm control and/or monitoring system such as, for example, an AutroMaster system. The alarm system devices 202 can be any type of alarm device such as, for example, a multi detector-occupancy-temperature-smoke (MDOTS) sensor mounted in a monitored space of a building or vessel. Additional alarm system devices 202 include but are not limited to smoke, fire and carbon monoxide detectors, heat detectors, pull alarms, manual call points, sounders, strobes and relay modules. The alarm system devices 202 can communicate with each other. For example, a control panel is communicative coupled to the various alarm system devices 202.

According to the invention, the system 200 includes voice over internet protocol (VOIP) communication apparatuses 204 that are included with the alarm system devices 202. VOIP is a methodology and group of technologies for the delivery of voice communications and multimedia sessions over Internet Protocol (IP) networks, such as the Internet. A VOIP communication apparatus 204 uses voice over IP technologies for placing and transmitting telephone calls over an IP network, such as the Internet, instead of the traditional public switched telephone network.

According to invention, a service technician 206 can access the VOIP communication apparatus 204 at the alarm system device 202. The VOIP communication apparatus 204 can communicate over a network 210 to the alarm monitoring system 212 and to a technical support representative 208 controlling the alarm monitoring system 212. Additionally, the service technician 206 can communicate with a remote service technician 210 by utilizing the VOIP communication apparatus 204 to communicate with an electronic device such as another VOIP communication apparatus, a smart communication apparatus, tablet, or computer system. According to the invention, the service technician 206 utilizes the VOIP communication apparatus204 to communicate with a second service technician 212 that is located at another alarm system device 202 utilizing the VOIP communication apparatus204 at the alarm system device 202. For example, a technician in a control room can communicate with a service technician that is investigating an issue around a facility or vessel.

According to the invention, the alarm system devices 202 provides access to a technician based on the identity of the service technician, such that a low level service technician has only limited access to the VOIP communication apparatus 204, where the VOIP communication apparatus 204 can make calls to the alarm monitoring system 212 only. Higher level service technicians has full access allowing the higher level service technicians to make calls through the VOIP communication apparatus 204 to other VOIP communication apparatuses 214 on other alarm system devices 202 and to remote service technician 210 cell phones. Also, the type of service technician accessing the VOIP communication apparatus 204, based on their identity, may have direct VOIP communication apparatus 204 calls to specific support technicians such as, for example, installers, distributor tech support, manufacturer support, emergency services, and the like. The fire alarm and control system can store in memory the specific support numbers or IP addresses to route the call depending on the user accessing the system. The number or IP addresses can be updated locally or remotely using remote services and connectivity to keep the correct information always up to date on the fire alarm and control system.

In one or more embodiments, the alarm system devices 202 and communication system 212 can be implemented on the processing system 100 found in FIG. 1. Additionally, the network 210 can be in wired or wireless electronic communication with one or all of the elements of the system 200. Cloud computing can supplement, support or replace some or all of the functionality of the elements of the system 200. Additionally, some or all of the functionality of the elements of system 200 can be implemented as a cloud computing node.

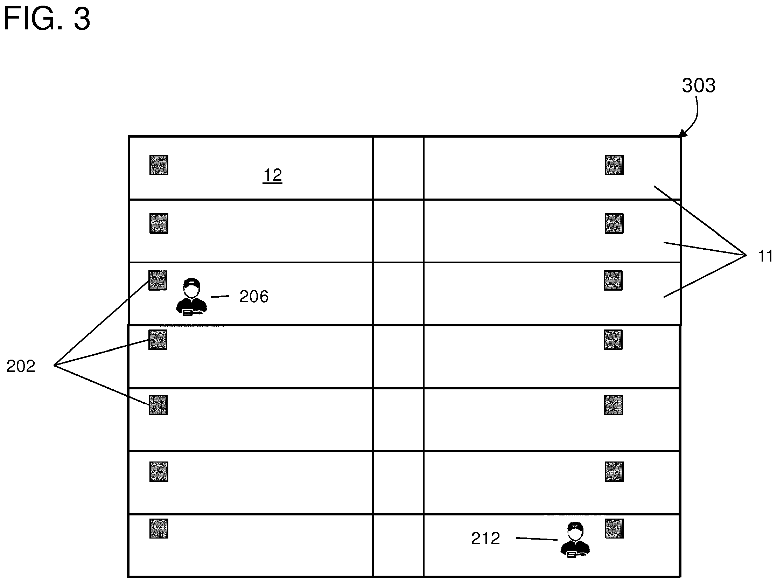

With reference to FIG. 3, a building 300 is provided and can include multiple floors 11 with multiple areas at each of the multiple floors 11 that together make up an interior 12 to the building 300. The building 300 includes a system for VOIP communication in a fire system 200. The system 200 includes various alarm system devices 202 that are distributed though the interior 12 of the building 300 and, in some cases, may also include an alarm monitoring system that may be local or remote with respect to the building 300. The alarm system devices 202 operate by detecting various conditions within the interior 12 of the building 300 and/or take various actions relative to those various conditions within the interior 12 of the building 300. To that end, the alarm system devices 202 may include, but are not limited to, smoke, fire and carbon monoxide detectors, heat detectors, pull alarms, manual call points, sounders, strobes and relay modules.

According to the invention, the alarm system devices 202 include VOIP communication apparatuses as described herein. An authorized user, such as a service technician 206, can access the VOIP communication apparatuses at any of the alarm system devices 202. The VOIP communication apparatuses at the alarm system devices 202 can communicate with other VOIP communication apparatuses at other alarm system devices 202. This allows communication between a service technician 206 and another service technician 212 that may be on a different floor 11.

In each case and for most but not necessarily all types of the alarm system devices 202, the alarm system devices 202 are installed in various areas of the interior 12 of the building 300. Upon installation, each device may be configured for a certain detection or action purpose, and may be tested to determine that they are functioning as configured and intended. Each device may also be configured to provide certain information upon request.

## Claims

1. A fire control and detection system (200) with integrated voice over internet protocol communication, the system comprising:
alarm system devices (202) which are respectively operable to detect various conditions within a predefined space and to take various actions relative to the various conditions within the predefined space;
an alarm monitoring system (212) in electronic communication with the alarm system devices (202);
**characterized in that** each of the alarm system devices (202) includes a voice over internet protocol (VOIP) communication apparatus (204), the alarm system devices (202) being configured to provide access to a technician (212) based on the identity of the service technician (212) and such that:
a low level service technician (212) having limited access to the VOIP communication apparatus (204), where the VOIP communication apparatus (204) allows to make calls to the alarm monitoring system (212) only; and
higher level service technicians (212) have full access allowing the higher level service technicians to make calls through the VOIP communication apparatus (204) to other VOIP communication apparatuses (214) on other alarm system devices (202) and to remote service technician (210) cell phones.

2. The system of Claim 1, wherein the alarm system devices (202) comprise smoke, fire and carbon monoxide detectors, heat detectors, pull alarms, manual call points, sounders, strobes and relay modules.

3. The system of claim 1, wherein the fire control and detection alarm system (200) for deployment in a building and wherein the predefined space is a building and the alarm system devices (202) are distributed throughout an interior of the building.

4. A method of operating a fire control and detection system integrated with integrated voice over internet protocol (VOIP) deployed at a location in which alarm system devices (202) are distributed to detect various conditions within the location and to take various actions relative to the various conditions within the location, the method comprising:
installing an integrated VOIP apparatus (204) on each of the alarm system devices (202);
receiving a user (206) input into the VOIP communication apparatus (204) at a first alarm system device (202);
based on the user input, identify access-rights of the user (206); and
routing a call to a support system based at least in part on the user input and the access rights of the user;
such that the alarm system devices (202) can provide access to a technician (212) based on the identity of the service technician (212) and such that:
a low level service technician (212) having limited access to the VOIP communication apparatus (204), where the VOIP communication apparatus (204) allows to make calls to the alarm monitoring system (212) only; and
higher level service technicians (212) have full access allowing the higher level service technicians to make calls through the VOIP communication apparatus (204) to other VOIP communication apparatuses (214) on other alarm system devices (202) and to remote service technician (210) cell phones.

## Patentansprüche

1. Ein Feuerkontroll- und Feuererkennungssystem (200) mit integrierter Voice-Over-Internet-Protokoll-Kommunikation, wobei das System Folgendes aufweist:
Alarmsystemvorrichtungen (202), die jeweils so betreibbar sind, dass sie verschiedene Bedingungen innerhalb eines vordefinierten Raums erkennen und verschiedene Maßnahmen in Bezug auf die verschiedenen Bedingungen innerhalb des vordefinierten Raums ergreifen;
ein Alarmüberwachungssystem (212) in elektronischer Kommunikation mit den Alarmsystemvorrichtungen (202);
**dadurch gekennzeichnet, dass** jedes der Alarmsystemvorrichtungen (202) ein Voice-Over-Internet-Protocol-(VOIP)-Kommunikationsgerät (204) aufweist, die Alarmsystemvorrichtungen (202) so konfiguriert sind, dass sie einem Techniker (212) auf Grund der Identität des Servicetechnikers (212) Zugriff gewährt, und dass:
ein niedrigqualifizierter Servicetechniker (212) eingeschränkten Zugriff auf das VOIP-Kommunikationsgerät (204) hat, sodass das VOIP Kommunikationsgerät (204) nur Anrufe an das Alarmüberwachungssystem (212) zulässt, und
höherqualifizierte Servicetechniker (212) vollen Zugriff haben, sodass die höherqualifizierten Servicetechniker über das VOIP-Kommunikationsgerät (204) Anrufe an andere VOIP-Kommunikationsgeräte (214) auf anderen Alarmsystemvorrichtungen (202) und an Mobiltelefone entfernter Servicetechniker (210) tätigen können.

2. Das System nach Anspruch 1, wobei die Alarmsystemvorrichtungen (202) Rauch-, Feuer- und Kohlenmonoxiddetektoren, Wärmedetektoren, Zugalarme, Handfeuermelder, Schallgeber, Blitzlichter und Relaismodule umfassen.

3. Das System nach Anspruch 1, wobei das Feuerkontroll- und Feuererkennungsalarmsystem (200) für den Einsatz in einem Gebäude vorgesehen ist und wobei der vordefinierte Raum ein Gebäude ist und die Alarmsystemgeräte (202) im gesamten Inneren des Gebäudes verteilt sind.

4. Ein Verfahren zum Betreiben eines Feuerkontroll- und Feuererkennungssystems integriert mit integriertem Voice-Over-Internet-Protokoll (VOIP), das an einem Standort eingesetzt wird, an dem Alarmsystemgeräte (202) verteilt sind, um verschiedene Bedingungen innerhalb des Standorts zu erkennen und verschiedene Maßnahmen im Zusammenhang mit den verschiedenen zu ergreifen Bedingungen innerhalb des Standorts, wobei das Verfahren Folgendes umfasst:
Installieren eines integrierten VOIP-Geräts (204) auf jedem der Alarmsystemvorrichtungen (202);
Empfangen einer Eingabe eines Benutzers (206) in das VOIP-Kommunikationsgerät (206) an einer ersten Alarmsystemvorrichtung (202);
basierend auf der Eingabe des Benutzers, Identifizierung der Zugriffsrechte des Benutzers (206); und
Weiterleiten eines Anrufs an ein Hilfssystem zumindest teilweise auf der Grundlage der Eingabe des Benutzers und der Zugriffsrechte des Benutzers;
so dass das Alarmsystemgerät (202) einem Techniker (212) auf Grund der Identität des Servicetechnikers (212) Zugang gewähren kann und dass:
ein niedrigqualifizierter Servicetechniker (212) eingeschränkten Zugriff auf das VOIP-Kommunikationsgerät (204) hat, wobei das VOIP-Kommunikationsgerät (204) nur Anrufe an das Alarmüberwachungssystem (212) zulässt; und
höherqualifizierte Servicetechniker (212) vollen Zugriff haben, sodass die höherqualifizierten Servicetechniker über das VOIP-Kommunikationsgerät (204) Anrufe an andere VOIP-Kommunikationsgeräte (214) auf anderen Alarmsystemvorrichtungen (202) und an Mobiltelefone entfernter Servicetechniker (210) tätigen können.

## Revendications

1. Système de contrôle et de détection d'incendie (200) avec communication par voix sur IP intégrée, le système comprenant :
des dispositifs de système d'alarme (202) pouvant respectivement être opérés pour détecter diverses conditions dans un espace prédéfini et pour prendre diverses mesures relatives aux diverses conditions dans l'espace prédéfini ;
un système de surveillance d'alarme (212) en communication électronique avec les dispositifs de système d'alarme (202) ;
**caractérisé en ce que** chacun des dispositifs de système d'alarme (202) comporte un appareil de communication par voix sur IP (VOIP) (204), les dispositifs de système d'alarme (202) étant configurés pour donner accès à un technicien (212) sur la base de l'identité du technicien (212) de service et de sorte que :
un technicien (212) de service de bas niveau ait un accès limité à l'appareil de communication VOIP (204), où l'appareil de communication VOIP (204) permet de passer des appels vers le système de surveillance d'alarme (212) uniquement ; et
des techniciens (212) de service de niveau supérieur aient un accès complet permettant aux techniciens de service de niveau supérieur de passer des appels par l'appareil de communication VOIP (204) vers d'autres appareils de communication VOIP (214) sur d'autres dispositifs de système d'alarme (202) et vers des téléphones cellulaires de techniciens (210) de service à distance.

2. Système de la revendication 1, dans lequel les dispositifs de système d'alarme (202) comprennent des détecteurs de fumée, d'incendie et de monoxyde de carbone, des détecteurs de chaleur, des alarmes à déclenchement, des points d'appel manuels, des avertisseurs sonores, des stroboscopes et des modules de relais.

3. Système de la revendication 1, dans lequel le système d'alarme de détection et de contrôle d'incendie (200) destiné à être déployé dans un bâtiment, et dans lequel l'espace prédéfini est un bâtiment et les dispositifs de système d'alarme (202) sont répartis à l'intérieur du bâtiment.

4. Méthode d'exploitation d'un système de contrôle et de détection d'incendie intégré avec une voix sur IP (VOIP) intégrée déployé au niveau d'un emplacement dans lequel des dispositifs de système d'alarme (202) sont répartis pour détecter diverses conditions au sein de l'emplacement et pour prendre diverses mesures relatives aux diverses conditions au sein de l'emplacement, la méthode comprenant :
l'installation d'un appareil VOIP (204) intégré sur chacun des dispositifs de système d'alarme (202) ;
la réception d'une entrée d'utilisateur (206) dans l'appareil de communication VOIP (204) au niveau d'un premier dispositif de système d'alarme (202) ;
sur la base de l'entrée d'utilisateur, l'identification de droits d'accès de l'utilisateur (206) ; et
l'acheminement d'un appel vers un système de support basé au moins en partie sur l'entrée d'utilisateur et les droits d'accès de l'utilisateur ;
de sorte que les dispositifs de système d'alarme (202) puissent donner accès à un technicien (212) sur la base de l'identité du technicien (212) de service et de sorte que :
un technicien (212) de service de bas niveau ait un accès limité à l'appareil de communication VOIP (204), où l'appareil de communication VOIP (204) permet de passer des appels vers le système de surveillance d'alarme (212) uniquement ; et
des techniciens (212) de service de niveau supérieur aient un accès complet permettant aux techniciens de service de niveau supérieur de passer des appels par l'appareil de communication VOIP (204) vers d'autres appareils de communication VOIP (214) sur d'autres dispositifs de système d'alarme (202) et vers des téléphones cellulaires de techniciens (210) de service à distance.
